**Europäisches Patentamt**

**European Patent Office**

**Office européen des brevets**

(19)

(11) Veröffentlichungsnummer: **0 167 203**
**B1**

(12) **EUROPÄISCHE PATENTSCHRIFT**

(45) Veröffentlichungstag der Patentschrift:
**14.12.88**

(21) Anmeldenummer: **85200981.0**

(22) Anmeldetag: **20.06.85**

(51) Int. Cl.⁴: **G 11 B 15/675**

(54) **Steuervorrichtung an einem Magnetbandkassettengerät mit einem von einer Servostange um einen Drehpunkt verschwenkbaren Einzieh- bzw. Auswurfhebel.**

(30) Priorität: **30.06.84 DE 3424234**

(43) Veröffentlichungstag der Anmeldung:
**08.01.86 Patentblatt 86/2**

(45) Bekanntmachung des Hinweises auf die Patenterteilung:
**14.12.88 Patentblatt 88/50**

(84) Benannte Vertragsstaaten:
**DE FR GB IT**

(56) Entgegenhaltungen:
**EP-A-0 052 393**
**EP-A-0 072 587**
**EP-A-0 095 815**

(73) Patentinhaber: **Philips Patentverwaltung GmbH, Wendenstrasse 35 Postfach 10 51 49, D-2000 Hamburg 1 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **FR GB IT**

(72) Erfinder: **Klös, Karl, Odenhäuserstrasse 4, D-6304 Ruttershausen (DE)**

(74) Vertreter: **Kupfermann, Fritz- Joachim, Dipl.- Ing., Philips Patentverwaltung GmbH Wendenstrasse 35 Postfach 10 51 49, D-2000 Hamburg 1 (DE)**

## Beschreibung

Steuervorrichtung an einem Magnetbandkassettengerät mit einem von einer Servostange um einen Drehpunkt verschwenkbaren Einzieh- bzw. Auswurfhebel

Die Erfindung bezieht sich auf eine Steuervorrichtung an einem Magnetbandkassettengerät

- mit einem von einer Servostange um einen Drehpunkt verschwenkbaren Einzieh- bzw. Auswurfhebel, der wenigstens während eines Teiles seiner Schwenkbewegung gegen Federkraft verschwenkbar ist,
- mit einem Kassettenlift, der über eine Absenk- und Anhebestrecke, die an einer Kontur der Servostange vorgesehen ist, absenk- bzw. anhebbar ist, wobei die Servostange zwischen einer ersten Endstellung, in der die Kassette ausgeworfen ist, und einer zweiten Endstellung, in der die Kassette eingezogen und abgesenkt ist, geradlinig hin und her bewegbar ist,
- mit einem an der Servostange vorgesehenen Stift, der den Einzieh- bzw. Auswurfhebel über eine Kulisse in diesem Hebel führt,
- mit einem am Kassettenlift vorgesehenen Führungselement, das die Kontur abfährt.

Eine derartige Steuervorrichtung ist aus der EP-A-0 095 815 bekannt (PHD 82-064 EP). Bei Magnetbandkassettengeräten, die in Autoradios eingesetzt werden, ist es wichtig, daß der Verschiebeweg der Servostange möglichst begrenzt wird. Um trotz der begrenzten Bewegung der Servostange einen möglichst großen Schwenkweg des Einzieh- und Auswurfhebels zu erreichen, werden die Drehachse des Einzieh- bzw. Auswurfhebels und ein Stift, der diese Hebel schwenkt, möglichst dicht aneinander gelegt. Dies hat jedoch zur Folge, daß bei Bewegung der Servostange das Übersetzungsverhältnis sehr groß ist und damit das Lager der Drehachse stark belastet wird. Insbesondere wenn das Lager aus Kunststoff gefertigt ist, besteht bei einer Dauerbelastung die Gefahr einer Verformung. Wegen der in einem Auto in warmen Jahreszeiten häufig herrschenden hohen Temperaturen ist diese Gefahr besonders groß. Auch werden bei derartigen Geräten üblicherweise Federn eingesetzt, die den Einzieh- bzw. Auswurfhebel in Auswurfstellung ziehen. Wenn nun eine Kassette eingeschoben ist, dann bleibt diese Feder ständig gespannt, und das Lager wird von der Feder dauernd belastet.

Die üblicherweise zum Einsatz kommenden Konturen für den Kassettenlift senken und heben den Lift praktisch im Bereich der gleichen Servostangenstellung. Man kann auf diese Weise die Weglängen beim Einziehen und Auswerfen nicht beeinflussen.

Es ist Aufgabe der Erfindung, eine Steuervorrichtung der eingangs erwähnten Art zu schaffen, bei der die Achse des Einzieh- und Auswurfhebels möglichst wenig belastet wird, indem der Abstand zwischen der Achse und dem auf der Servostange angeordneten Stift vergrößert sowie die Federbelastung zeitlich begrenzt ist, wobei die Gesamtbewegungslänge der Steuerstange im wesentlichen nicht verlängert wird.

Die gestellte Aufgabe ist erfindungsgemäß dadurch gelöst, daß auf dem Einzieh- und Auswurfhebel ein Federelement angeordnet ist, das nur längs eines Anfangsteiles der Kulisse auf den Stift einwirkt, und daß zwei Konturen für die Liftsteuerung vorgesehen und derart angeordnet sind, daß am Ende der Einzugbewegung des Hebels der Lift mit dem Führungselement zwangsweise erst die erste Kontur abfährt und danach am Anfang der Auswurfbewegung überwechselt zu der zweiten Kontur und diese in entgegengesetzter Richtung abfährt, wobei beide Konturen Absenk- bzw. Anhebestrecken aufweisen und die Absenkstrecke der ersten Kontur von der ersten Endstellung einen größeren Abstand hat als der Anhebebeginn der Anhebestrecke der zweiten Kontur.

Auf diese Art und Weise wird es möglich, unter Beibehaltung des Gesamtbewegungsweges der Servostange den Abstand des Stiftes auf der Servostange von der Drehachse des Einzieh- und Auswurfhebels zu vergrößern. Der Einziehweg wird nämlich aufgrund der längeren ersten Kontur größer als der Auswurfweg, der über die kürzere Kontur gesteuert wird. Obwohl der Einziehweg verlängert wird, liegt der Punkt, wo das Auswerfen beginnt, an einer Stelle, seitlich der alle Steuerfunktionen der Servostange noch möglich sind. Trotz vergrößerten Abstandes zwischen Drehachse und Stift kann die Steuerstange also alle von ihr auszuführenden Bewegungsfunktionen ausführen, und zwar innerhalb des durch das Gehäuse begrenzten Hubes der Servostangen.

Da das Federelement nur längs eines Anfangsteiles der Kulisse im Einzieh- und Auswurfhebel auf den Stift einwirkt, arbeitet es immer nur dann, wenn es gewünscht ist, und zwar beim Übergang vom Handeinschub auf den motorischen Einzug. Sobald die Kassette voll eingezogen ist, wird die Drehachse des Einzieh- und Auswurfhebels nicht mehr belastet, weil auch das Federelement auf den Einzieh- und Auswurfhebel keine Federbelastung mehr ausübt. Die Drehachse wird damit geschont und kann ohne Schwierigkeiten aus Kunststoff ausgeführt sein.

Nach einer weiteren Ausgestaltung der Erfindung ist vorgesehen, daß das Führungselement federbelastet ist senkrecht zur Verschieberichtung der Servostange von einer Kontur zur anderen Kontur. Auf diese Weise ist sichergestellt, daß das Führungselement zwangsweise immer von der einen Kontur auf die andere überwechselt.

Nach einer weiteren Ausgestaltung der Erfindung ist vorgesehen, daß beide Konturen aus einem langgestreckten Formteil bestehen, wobei die erste Kontur am Ende ihrer Absenkstrecke eine Abschrägung aufweist, über die das Führungselement hinübergezwungen wird zum Überwechseln zur zweiten Kontur, wenn die Servostange sich zurück bewegt von der zweiten Endstellung zur ersten Endstellung. Die Konturen lassen sich auf diese Weise im Spritzgußverfahren in Metall- oder Kunststofftechnik auf einfache Weise gemeinsam herstellen, wobei der Übergang von der einen Kontur zur anderen Kontur einwandfrei herstellbar ist.

Nach einer weiteren Ausgestaltung der Erfindung ist vorgesehen, daß das Führungselement aus einer Rolle besteht, die auf einer am Lift befestigten Achse in Achsrichtung der Achse verschiebbar ist unter der Wirkung einer Feder. Eine derartige Rolle ist außerordentlich leicht beweglich und funktionssicher auch nach langem Betrieb.

Die Erfindung wird anhand des in den Zeichnungen dargestellten Ausführungsbeispieles näher erläutert. Es zeigen:

Fig. 1 eine schaubildliche Darstellung eines Teiles des Laufwerks eines Magnetbandkassettengerätes nach der Erfindung,

Fig. 2A eine schaubildliche vergrößerte Darstellung eines Rastmechanismus des Laufwerkes nach Fig. 1 in einer ersten Lage,

Fig. 2B den Rastmechanismus nach Fig. 2A in einer zweiten Lage,

Fig. 3 einige Teile des Laufwerkes nach Fig. 1, von der Tonkopfseite her gesehen, in einer ersten Bandlaufrichtung,

Fig. 4 einige Teile des Laufwerkes nach Fig. 1, von der Tonkopfseite her gesehen, in einer zu Fig. 3 entgegengesetzten Bandlaufrichtung,

Fig. 5 das Zusammenwirken einer Leitschlitzanordnung des Laufwerkes nach Fig. 1 mit Steuermitteln für die Umschaltung der Bandlaufrichtung und Kopfplatte in einer Explosionsdarstellung,

Fig. 6 die verschiedenen Lagen einer Steuerplatte zur Steuerung der Leitschlitzanordnung und der Kopfplatte gemäß Fig. 5,

Fig. 7 eine schaubildliche Darstellung der Steuerplatte mit einer mit ihr zusammenwirkenden Servostange zur Vorgabe einer Vorzugsbandlaufrichtung,

Fig. 8 eine schaubildliche Darstellung einer die Servostange umfassenden Steuervorrichtung des Laufwerkes nach den vorhergehenden Figuren mit weiteren schematisch dargestellten Einzelteilen des Laufwerkes,

Fig. 9A eine schaubildliche Darstellung eines Kommandomechanismus für das Laufwerk des Magnetbandkassettengerätes,

Fig. 9B eine Draufsicht auf den Kommandomechanismus nach Fig. 9A,

Fig. 10A schaubildlich und Fig. 10B in Draufsicht eine Doppelkontur, auf der eine Rolle des Kassettenliftes entlangläuft und die so gestaltet ist, daß die Einzugs- und Auswurfwege unterschiedlich lang sind,

Fig. 11 ein Wegdiagramm der Servostange, an dem zu erkennen ist, daß das Absenken und Anheben des Liftes im Bereich verschiedenen Wegstrecken der Servostange erfolgt.

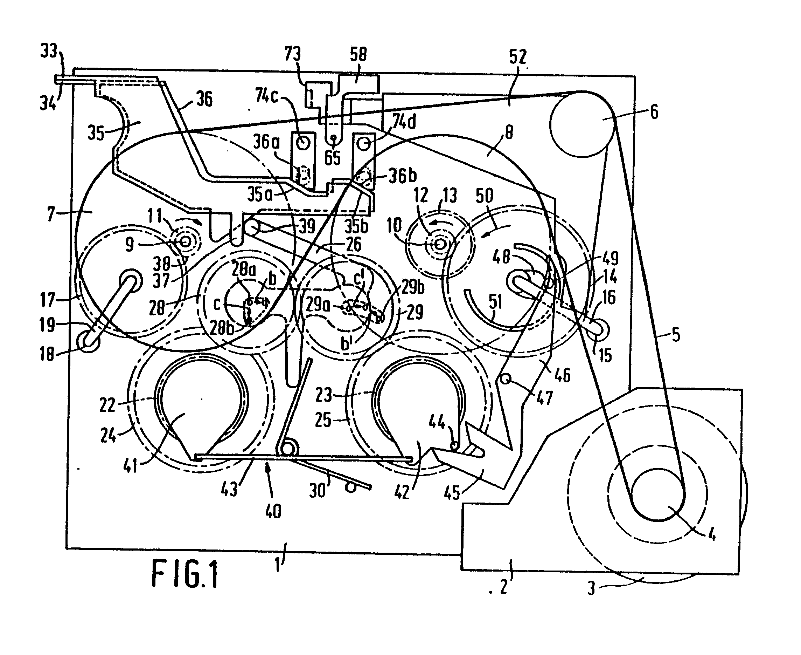

Das Magnetbandkassettengerät nach der Erfindung, wie in Fig. 1 dargestellt, weist ein Gestell 1 auf, das über eine Stütze 2 einen nur in einer Richtung umlaufenden Antriebsmotor 3 trägt. Das Abriebsritzel 4 des Motors 3 führt eine Peese 5, die über eine Umlenkrolle 6 über Schwungräder 7 und 8 derart geführt ist, daß die Schwungräder gegensinnig drehen. Die Schwungräder 7 und 8 sind im Gestell 1 gelagert. Die Schwungscheibe 7 ist fest verbunden mit einer Tonwelle 9, und die Schwungscheibe 8 ist fest verbunden mit einer Tonwelle 10. Weiterhin sind die Schwungscheibe 7 mit einem Zahnrad 11 und die Schwungscheibe 8 mit einem Zahnrad 12 verbunden. Über eine Rutschkupplung ist koaxial zu dem Zahnrad 12 ein weiteres Zahnrad 13 auf der Schwungscheibe 8 drehbar angeordnet. Mit dem Zahnrad 12 auf der Schwungscheibe 8 ist ständig kämmend ein als Zahnrad ausgebildetes Schaltrad 14 in Eingriff. Dieses Zahnrad 14 ist schwenkbar um eine Achse 15. Die Achse 15 trägt einen in Fig. 1 schematisch dargestellten Schwenkarm 16, auf dem drehbar das Schaltrad 14 gelagert ist. In ähnlicher Weise kämmt mit dem Zahnrad 11 ständig ein Zahnrad 17. Dieses Zahnrad 7 ist drehbar um eine Schwenkachse 18 mittels eines schematisch dargestellten Schwenkarmes 19.

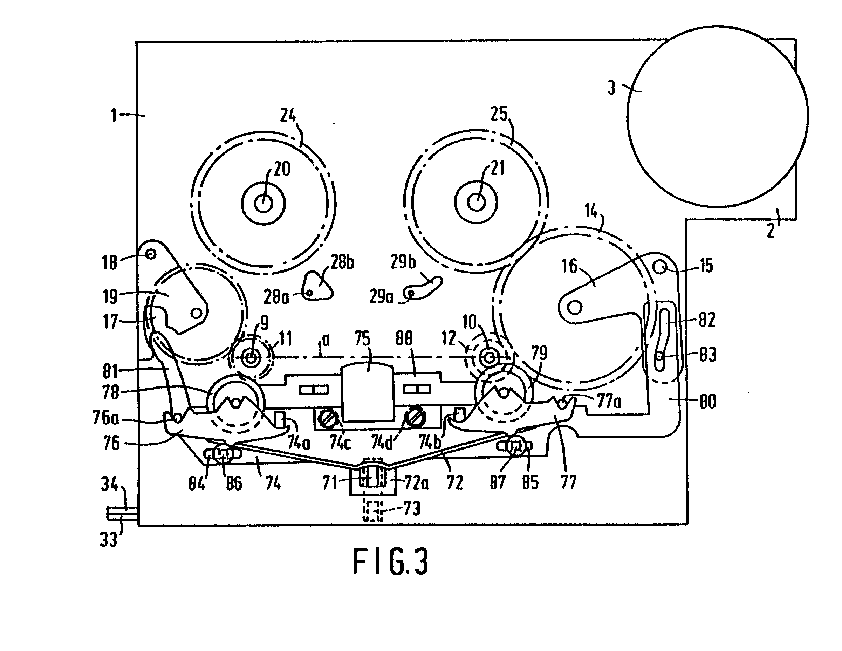

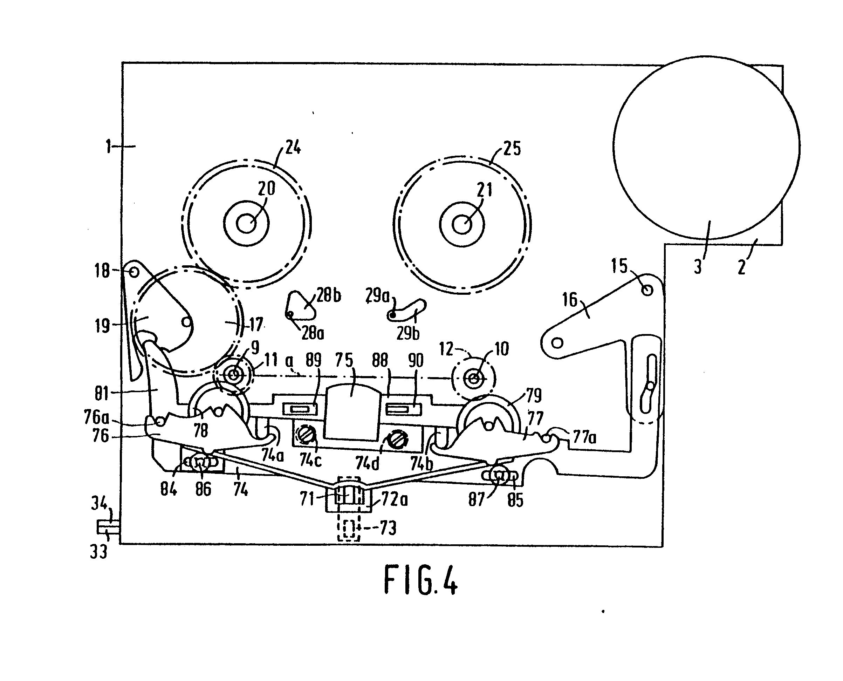

Wie auch in Fig. 3 und 4 dargestellt, sind drehbar im Gestell 1 Wickeldorne 20 und 21 gelagert. Diese Wickeldorne 20 und 21 sind fest verbunden mit Schnellspulrädern 22, 23. Über Rutschkupplungen sind mit den Wickeldornen 20, 21 Spielräder 24, 25 verbunden.

In Fig. 3 ist dargestellt, wie das Spielrad 25 über das Schaltrad 14 von dem Zahnrad 12 angetrieben wird. In Fig. 4 ist auf ähnliche Weise zu sehen, wie das Spielrad 24 über das Zahnrad 17 vom Zahnrad 1 angetrieben wird.

Ein Bügel 26, der verschiebbar im Gestell 1 gelagert ist, trägt nebeneinander zwei Zahnräder 28, 29 (siehe Fig. 1). Eine Feder 30 drückt den Bügel 26 immer in eine in Fig. 1 dargestellte Ausgangsposition.

Der Bügel 26 trägt zwei Stifte 28a und 29a, die in einem dreieckigen Loch 28b bzw. einem Schlitz 29b verschiebbar sind im Gestell 1.

Zum schnellen Vor- und Rücklauf sind zwei nebeneinander angeordnete, längsverschiebliche Bedienungsstangen 33 und 34 vorgesehen, die mit Schiebern 35, 36 verbunden sind. Diese Schieber 35 und 36 wirken auf den Bügel 26 ein. Dazu ist der Schieber 35 mit einem Ansatz 37 versehen, der Schieber 36 trägt entsprechend eine Auflauffläche 38. Der Ansatz 37 und die Auflauffläche 38 arbeiten auf einen Stift 39 des Bügels 26. Weiter sind die Schieber 35, 36 mit Auflaufflächen 35a, 35b bzw. 36a, 36b versehen, die arbeiten können auf Stifte 74c, 74d einer Kopfplatte 74 (siehe auch Fig. 3, 4).

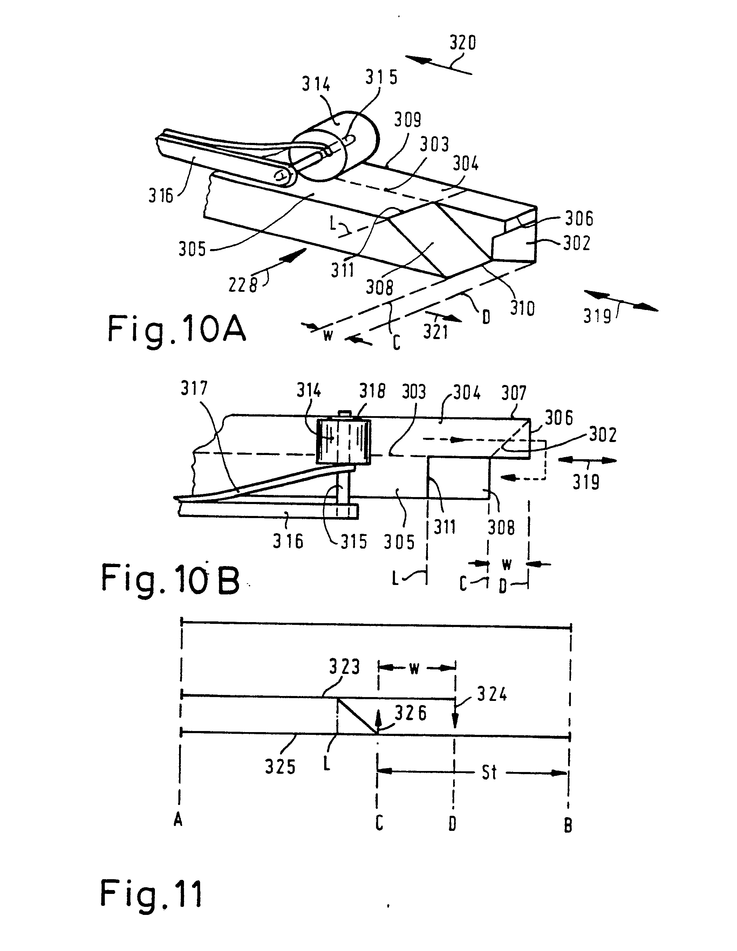

Wenn auf noch in Verbindung mit Fig. 9 zu beschreibende Weise durch Eindrücken der Bedienungsstange 33 der Ansatz 37 gegen den Stift 39 des Bügels 26 drückt, kommt erst das Zahnrad 29 in Eingriff mit dem Zahnrad 13. Dabei macht der Stift 28a eine Bewegung in Richtung des Pfeiles b und der Stift 29a eine Bewegung in Richtung des Pfeiles c'. Bei weiterer Bewegung fährt der Stift 29a weiter in Richtung des Pfeiles b' und kommt das Zahnrad 29 auch in Eingriff mit dem Zahnrad 23. Das Magnetband wird jetzt mit dem Wickeldorn 21 schnell aufgewickelt. Wird auf noch in Verbindung mit Fig. 9 zu beschreibende Weise die andere Bedienungsstange 34 eingedrückt, dann wirkt die Auflauffläche 38 auf den Stift 39 des Bügels 26 ein, wodurch der Stift 28a in Richtung des Pfeiles c und der Stift 29a in Richtung des Pfeiles c' fährt, womit das Zahnrad 29 mit dem Zahnrad 13 und das Zahnrad 28 mit dem Zahnrad 22 in Eingriff kommt. Dadurch wird der andere Wickeldorn 21 zum Schnellspulen angetrieben.

Wenn die Kopfplatte 74 in eine Spielstellung gelangt ist, nehmen die Stifte 74c, 74d eine der gestrichelten Lagen in Fig. 1 ein. Die Lagen stimmen überein mit den Lagen gemäß Fig. 3 bzw. Fig. 4. Das Eindrücken der Bedienungsstange 33 bzw. 34 hat jetzt zur Folge, daß über die Auflauffläche 35a, 35b bzw. 36a, 36b die Stifte 74c, 74d und damit die Kopfplatte 74 nach links geschoben werden, so daß ein Tonkopf 75 und Andruckrollen 78, 79 abgehoben werden von dem Magnetband.

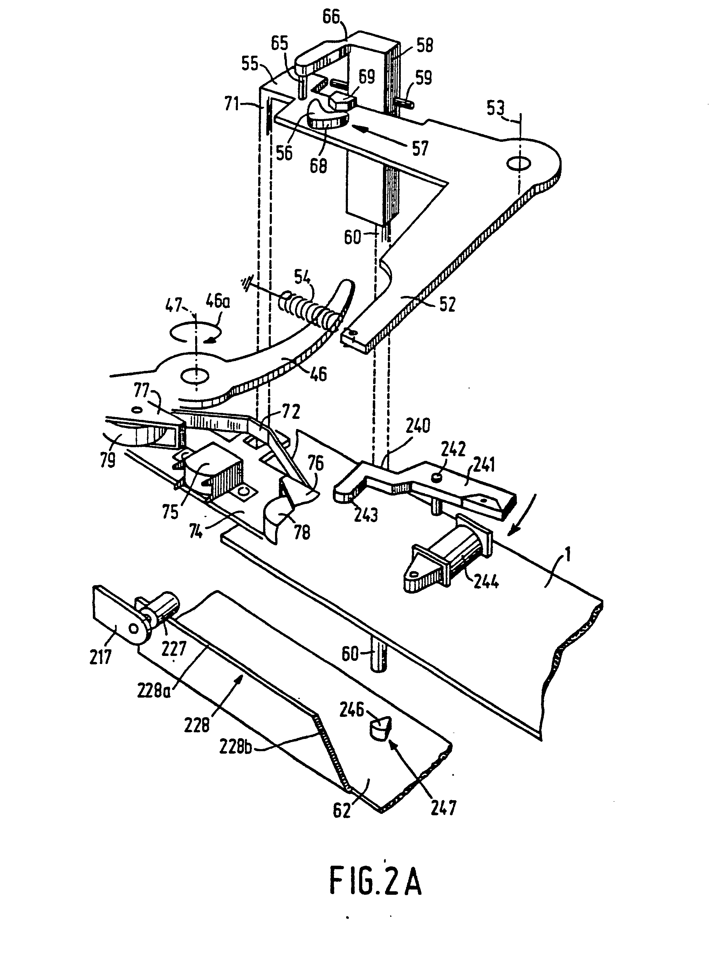

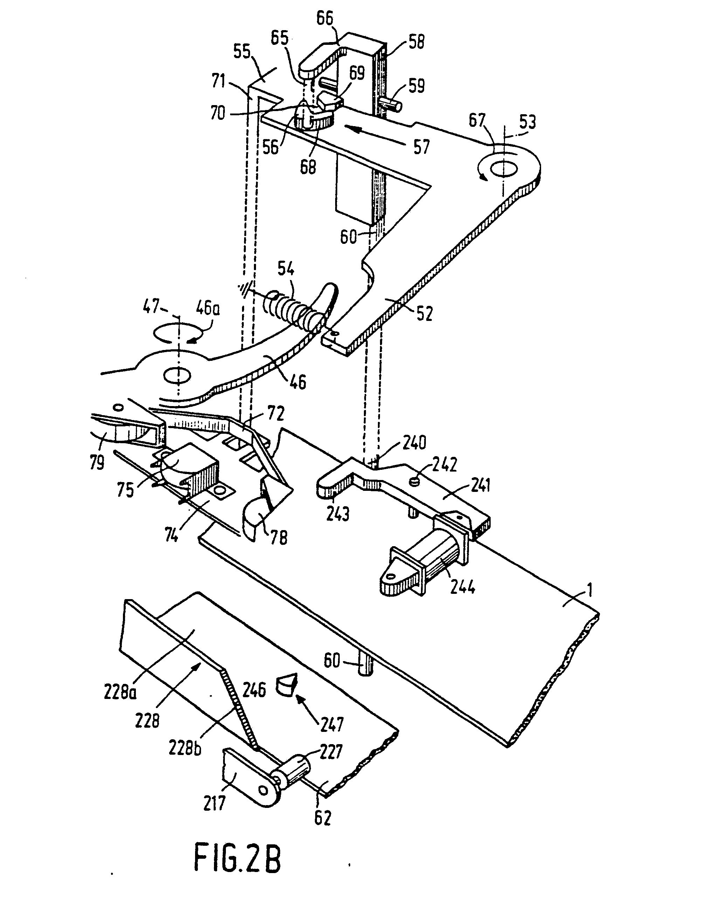

Ein Detektionsorgan 40, bestehend aus zwei Scheiben 41, 42 und einer Verbindungsstange 43, ist über Rutschkupplungen mit den Wickeldornen 20, 21 verbunden. Auf der Scheibe 42 ist ein Stift 44 angeordnet, der innerhalb einer Schaltgabel 45 liegt. Die Schaltgabel 45 ist an einem Schaltelement 46 angeordnet, die um ein Lager 47 drehbar ist (vergl. auch Fig. 2A und 2B). Das Schaltrad 14 trägt in seiner Mitte erhaben vorstehend einen ein wenig ellipsenförmigen Nocken 48. Das Schaltelement 46 greift über das Schaltrad 14 und trägt einen Stift 49, der bei nach innen geschwenktem Schaltelement 46 um den Nocken 48 herumfahren kann bei Drehung des Schaltrades in Richtung eines Pfeiles 50. Um den Nocken 48 herum erstreckt sich in einem größeren Abstand eine erhaben aus dem Schaltrad 14 herausstehende, spiralförmige Steuerkurve 51. Auch diese Steuerkurve 51 kann mit dem Stift 49 an dem Schaltelement 46 zusammenwirken, und zwar immer dann, wenn das Detektionsorgan den Bandstillstand feststellt. In diesem Fall drückt der Stift 44 nicht mehr gegen die Schaltgabel 45, wodurch der Stift 49 am Schaltelement 46 nicht mehr nach innen in Richtung auf den Nocken 48 belastet wird, sondern stehen bleibt und bei fortgehender Drehung des Schaltrades 14 in Richtung des Pfeiles 50 auf die Außenseite der Steuerkurve 51 gelangt. Weil die Steuerkurve 51 spiralförmig ist, wird das Schaltelement 46 im Uhrzeigersinn (Pfeil 46a in Fig. 2A, 2B) um sein Lager 47 verschwenkt, wodurch das Schaltelement 46 gegen ein Verbindungselement 52 gedrückt wird.

Das Verbindungselement 42 ist ein doppelarmiger Hebel, der um ein Lager 53 schwenkbar ist. Wie aus den schaubildlichen Darstellungen in Fig. 2A und 2B zu erkennen ist, ist das Verbindungselement 52 aufgrund der Wirkung einer Feder 54 im Uhrzeigersinn federbelastet. Damit spannt die Bewegung des Schaltelementes 46 die Feder 54.

Der von dem Angriffspunkt des Schaltelementes 46 abgewandte Hebelarm 55 des Verbindungselementes 52 trägt eine Herzkurve 56, die zu einem Rastmechanismus 57 gehört. Zu dem Rastmechanismus 57 gehört auch ein Rasthebel 58, der um eine Achse 59 verschwenkbar ist. Die Achse 59 liegt parallel zu der Oberfläche des Gestells 1 und zu einer gedachten Verbindungslinie a zwischen den Tonwellen 9 und 10. Der Rasthebel 58 trägt auf der zur Herzkurve 56 gerichteten Seite einen Führungsstift 60, der durch ein Loch 61 im Chassis 101 hindurchgreift. Die Verstellung des Rasthebels um die Achse 59 wird später in Verbindung mit Fig. 8 erläutert.

Der Rasthebel 58 trägt einen Raststift 65, der in die Herzkurve 56 einfahrbar ist und die Herzkurve umfahren kann. Die Umfahrbarkeit wird z. B. über ein Filmgelenk 66 herbeigeführt. In Fig. 2A liegt der Stift 65 oberhalb der Herzkurve 56. In Fig. 2B ist der Stift 65 in den Bereich der Herzkurve 56 hineingefahren. Damit kann der Stift 65 mit der Herzkurve 56 zusammenwirken, wenn das Schaltelement 46 das Verbindungselement 52, wie in der Darstellung nach Fig. 2B, entgegen dem Uhrzeigersinn in Richtung eines Pfeiles 67 verschwenkt. Bei diesem Verschwenken ist der Stift 65 an einer Seitenwand 68 der Herzkurve 56 entlang gelaufen. Ein Führungsnocken 69 sorgt dafür, daß der Stift 65 in eine Mulde 70 der Herzkurve 56 einfällt.

Am Hebelarm 55 ist ein Nocken 71 angeordnet. Dieser Nocken 71 wirkt, wie sich aus den Fig. 3 und 4 ergibt, mit einer Blattfeder 72 zusammen und erstreckt sich durch einen Längsschlitz 23 im Gestell 1 hindurch. Die Blattfeder 72 drückt mit ihren freien Enden gegen Halterungen 76, 77, die auf der Kopfplatte 74 gelagert sind. Diese Kopfplatte 74 trägt in ihrer Mitte den Tonkopf 75 und beiderseits des Tonkopfes 75 die Halterungen 76, 77, in denen die Andruckrollen 78, 79 gelagert sind. Die Halterungen werden gegen Anschläge 74a, 74b der Kopfplatte 74 gedrückt.

Die Kopfplatte 74 hat abgewinkelte Enden 80, 81. Das abgewinkelte Ende 80 weist einen Schlitz 82 auf, in dem ein Stift 83 verschiebbar ist, der auf dem Schwenkarm 16 befestigt ist. Dadurch ist in der Stellung nach Fig. 3 der Schwenkarm 16 derart um die Achse 15 verschwenkt, daß das Schaltrad 14 mit dem Spielrad 25 und dem Zahnrad 12 kämmt. Dementsprechend ist in Fig. 4 dargestellt, daß das abgewinkelte Ende 81 der Kopfplatte 74 den Schwenkarm 19 um die Schwenkachse 18 geschwenkt hat, wodurch das Zahnrad 17 mit dem Spielrad 24 und dem Zahnrad 11 kämmt. Dementsprechend ist in der Stellung nach Fig. 3 die Druckrolle 79 gegen die Tonwelle 10 gedrückt, während in der Stellung nach Fig. 4 die Andruckrolle 78 gegen die Tonwelle 9 gedrückt ist.

In der Kopfplatte 74 sind parallel zu der Verbindungslinie a zwischen den Tonwellen 9, 10 Längsschlitze 84, 85 angeordnet, in denen Leitstifte 86, 87 verschiebbar sind.

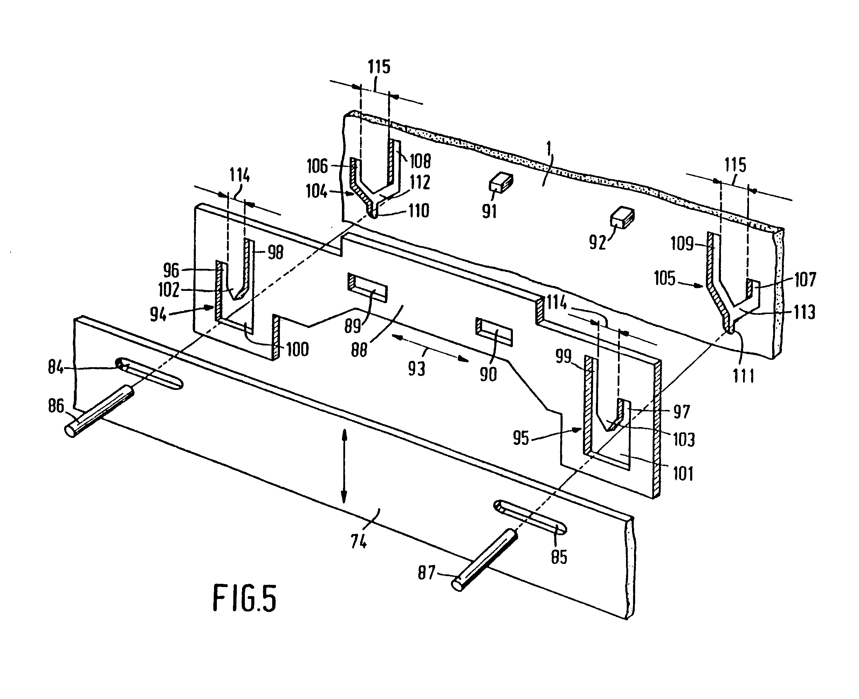

Fig. 5 zeigt anhand der Explosionsansicht in der Kopfplatte 74 geführte Leitstifte 86, 87, die in den Längsschlitzen 84, 85 geführt sind. Die Leitstifte sind damit parallel zu der Verbindungslinie a zwischen den Tonwellen verschiebbar. Die Halterung der Leitstifte 86, 87 an der Kopfplatte 74 ist in den Zeichnungen nicht näher dargestellt. Bei einer einfachen Ausführungsform sind die Leitstifte wie die Stifte von Reißnägeln an einer kappenförmigen Platte befestigt. Es ist aber ebensogut auch möglich, die Leitstifte an den freien Enden von federnden Zungen anzuordnen, die an der Kopfplatte 74 befestigt sind.

Zwischen der Kopfplatte 74 und der Chassisplatte an der Oberseite des Gestells 1 ist eine als Steuermittel dienende Steuerplatte 88 angeordnet. Diese Steuerplatte 88 ist mit Längsschlitzen 89, 90 versehen, durch die Führungsnocken 91, 92 der Chassisplatte hindurchgreifen. Dadurch ist die Steuerplatte 88 parallel zu der gedachten Verbindungslinie zwischen den Tonwellen 9, 10 verschiebbar. Die Verschiebbarkeit ist in Fig. 5 durch einen Doppelpfeil 93 angegeben.

Die Steuerplatte 88 ist an beiden Enden mit U-förmigen Schlitzen 94, 95 versehen. Von den U-förmigen Schlitzen 94 und 95 ist jeweils ein Schenkel 96, 97 kürzer und ein Schenkel 98, 99 länger ausgebildet. Die kürzeren Schenkel sind voneinander weg angeordnet und die längeren Schenkel dementsprechend aufeinander zu. Die Verbindungsbasis 100 und 101 zwischen den kürzeren und längeren Schenkeln ist stark verbreitert ausgebildet. Zwischen den längeren und kürzeren Schenkeln sind Materialzungen 102 und 103 ausgebildet, die an ihren zur Basis 100, 101 gerichteten Enden angespitzt sind.

In der Chassisplatte des Gestells 1 sind als Leitschlitzanordnungen dienende gabelförmige Leitschlitze 104 und 105 angeordnet mit zwei den Gabelzinken entsprechenden Schenkeln, von denen jeweils einer 106, 107 kürzer als der andere 108, 109 ausgebildet ist. Am Gabelschaft ist ein mittiger Einlaufschlitz 110, 111 vorgesehen, der sich an den trichterförmigen Gabelfuß 112, 113 anschließt. Der gegenseitige Abstand 114 der Schenkel der U-förmigen Leitschlitze 94, 95 in der Steuerplatte 88 ist geringer als der gegenseitige Abstand 115 der Schenkel der gabelförmigen Leitschlitze 104, 105.

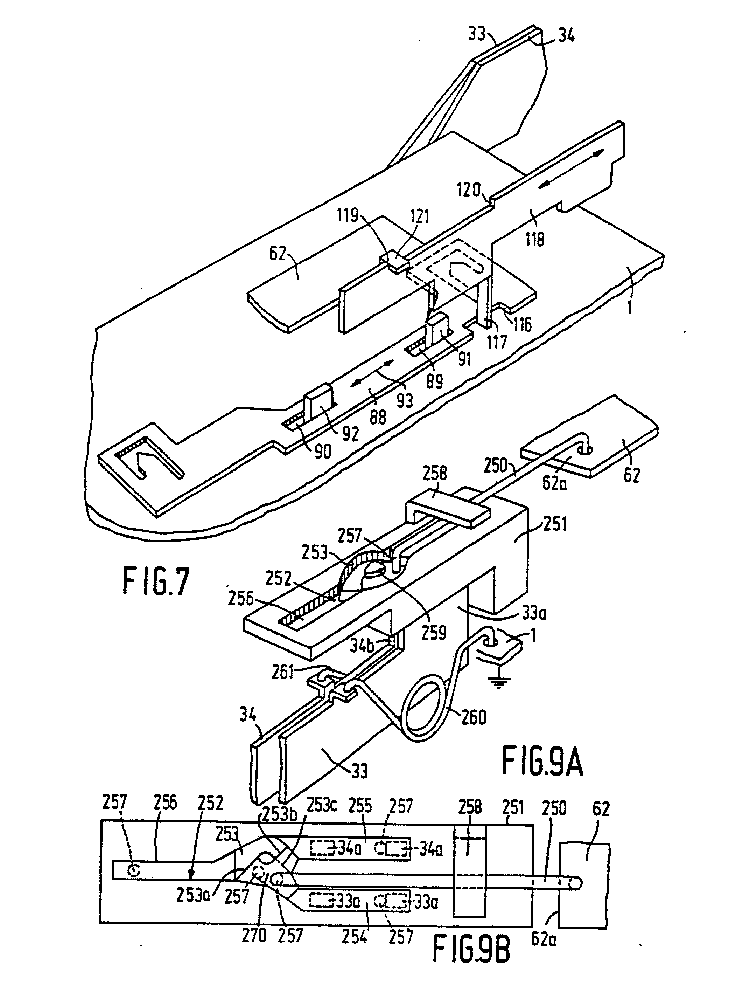

Fig. 7 zeigt anhand einer schaubildlichen Darstellung auf der Chassisplatte des Gestells 1 die Steuerplatte 88. Die Steuerplatte 88 ist mit einem Anschlag 116 versehen, gegen eine

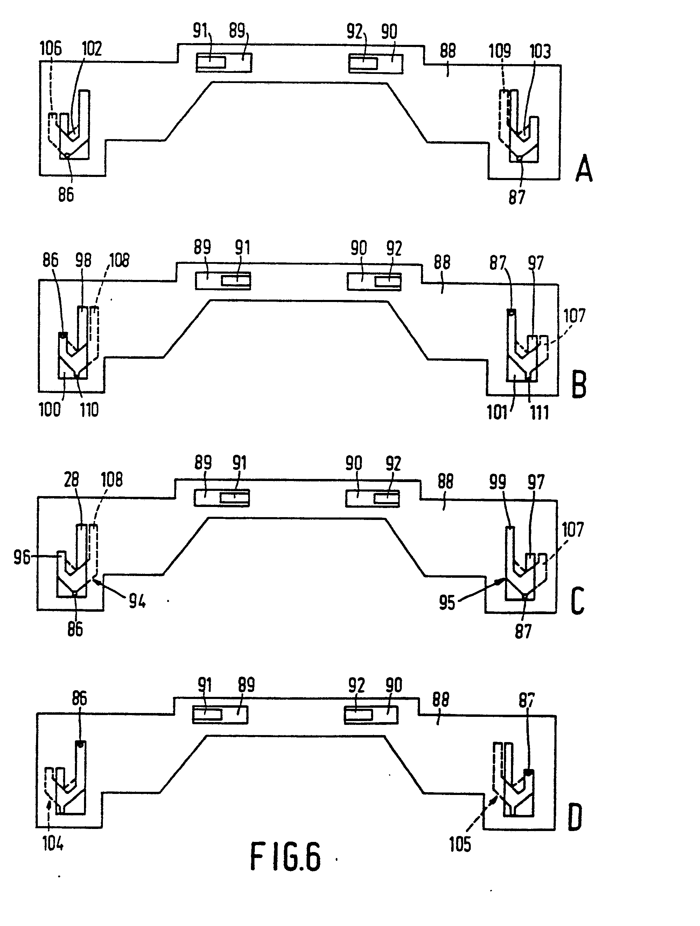

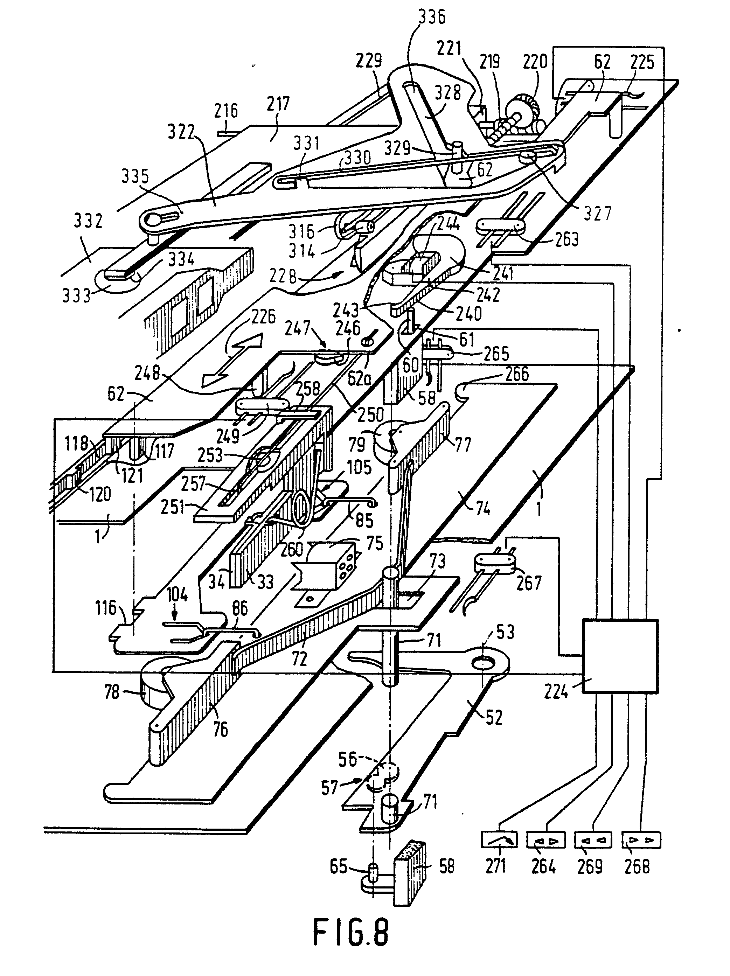

Nase 117 eines Zwischenschiebers 118 stoßen kann, der parallel zu der gedachten Verbindungslinie a zwischen den Tonwellen 9 und 10 verschiebbar ist (Fig. 4 und 5). Der Zwischenschieber 118 ist mit zwei Anschlägen 119, 120 versehen, zwischen die ein Mitnehmer 121 einer noch in Verbindung mit Fig. 8 zu beschreibenden Servostange 62 drücken kann. Wenn die Stange 62 nach rechts für das Auswerfen einer Kassette bewegt wurde, dann hat sie den Zwischenschieber 118 nach rechts mitgenommen, weil der Mitnehmer 121 gegen den Anschlag 120 gestoßen ist. Dadurch ist die Nase 117 gegen den Anschlag 116 gestoßen. Die Steuerplatte 88 ist damit in Richtung des Doppelpfeiles 93 nach Fig. 7 nach rechts verschoben worden und in einer Vorzugslage nach Fig. 6C festgelegt. Wird die Stange 62 demgegenüber nach links bewegt, dann stößt der Mitnehmer 121 gegen den Anschlag 119. Dadurch ist die Nase 117 von dem Anschlag 116 abgerückt und ist die Steuerplatte 88 frei beweglich im Rahmen des zuvor beschriebenen Bewegungsablaufes.

Zu dem in Fig. 8 dargestellten Servomechanismus gehört eine Servostange 62, die seitlich eines Kassettenliftes 217 in Längsrichtung 226 im Gestell 1 verschieblich ist. Die Längsrichtung ist die Einzieh- und Auswurfrichtung einer Kassette 332. Die Servostange 62 wird verschoben mit Hilfe einer Gewindespindel 219. Diese Gewindespindel wird über ein Schneckengetriebe 220 angetrieben von einem reversierbaren Servomotor 221; er wird gesteuert von einer Steuerschaltung 224 nach Art eines Mikroprozessors. Ein Schalter 225 auf dem Gestell 1 begrenzt nach einer Richtung die Schiebebewegung der Servostange 62. Der Schalter 225 ist von der Schaltvorrichtung 224 als Endstellungsmarkierung der Servostange 62 in Richtung des Doppelpfeiles 226 erkennbar, an der alle Steuerstangenhübe referieren.

Der um eine Achse 216 schwenkbare Lift 217 ist mit Hilfe einer Rolle 314 höhengesteuert geführt an einer Doppelkontur 228 der Servostange 62. Die Doppelkontur 228 ist in Fig. 10 schaubildlich dargestellt; sie besteht aus einem langgestreckten Metall- oder Kunststoffspritzteil, das sich von der in Fig. 8 dargestellten rückwärtigen Seite her nach vorn erstreckt und an seiner Vorderseite 302 frei endet. Die Doppelkontur 228 besteht aus zwei durch eine gestrichelte Linie 303 nur theoretisch voneinander getrennten Konturen 304 und 305. Die Kontur 304 endet an einer vertikal verlaufenden Abbruchkante 306. Die Abbruchkante 306 schließt mit einer Seitenfläche 307 des Körpers der Doppelkontur 228 einen etwa rechten Winkel ein.

Die Kontur 305 weist eine Neigungsfläche 308 auf. Diese Neigungsfläche 308 beginnt versetzt zur Abbruchkante 306 um einen Wegabstand w an einer Kante 310. Die Neigungsfläche 308 verläuft von der Kante 310 bis zu einer Abknickkante 311 und endet an dem horizontalen Teil der Kontur 305.

Auf der Doppelkontur 228 kann eine als Führungselement dienende Rolle 314 ablaufen. Diese Rolle 314 ist auf einer Achse 315 längsverschieblich gelagert. Die Achse 315 ist an einem Ausleger 316 des Liftes befestigt. Eine Blatt- oder Drahtfeder 317 drückt die Rolle 314 auf der Achse 315 von dem Ausleger 316 weg gegen eine Anschlagscheibe 318.

Die Doppelkontur 228, die an der Servostange 62 befestigt ist, bewegt sich in Richtung eines Doppelpfeiles 319 hin und her und führt dabei bestimmte Steuerfunktionen aus. Die in den Fig. 10A und 10B dargestellte Kulissensteuerung dient allein dem Anheben und Absenken des Liftes und damit der Kassette in die Spielposition oder dem Anheben der Kassette aus der Spielposition heraus. Es sei angenommen, daß sich die Steuerstange in Richtung eines Pfeiles 320 bewegt. Dann rollt die Rolle 314 auf der Kontur 304 entlang und fällt dann am Ende der Kontur bei 306 herab. Bei diesem Herabfallen senkt sich der Lift. Der Spielbetrieb der Kassette kann beginnen. Soll die Kassette wieder aus der Spielstellung angehoben werden, dann fährt die Steuerstange in Richtung eines Pfeiles 321 nach rechts. Die Rolle 314 wird nun von einer Schrägfläche 302 zur Kontur 305 hinüber gedrückt und rollt auf der Neigungsfläche 308 hoch, wobei der Lift von der sich anhebenden Rolle 314 angehoben wird. Der Bewegungsweg der Rolle 314 von der Kontur 304 zur Kontur 305 ist in Fig. 10B durch gestrichelte Pfeile angedeutet.

In Fig. 11 ist eine Wegdiagramm aufgezeichnet, welches den Sinn der unterschiedlichen Kulissenformen erläutert. Die Servostange 62 ist zwischen einer ersten Endstellung A und einer zweiten Endstellung B verschiebbar. Während dieses Verschiebeweges werden Einzieh- und Auswurfvorgänge der Kassette sowie Steuervorgänge des Servomechanismus vorgenommen. Zwischen den Punkten A und B befindet sich ein Punkt C, der eine Unterteilung vornimmt in eine Bewegungsstrecke zwischen A und D, bei der die Einziehbewegung vor sich geht, und einer Strecke St zwischen C und B, in der Steuervorgänge vorgenommen werden. Aufgrund der Konstruktion eines später zu erläuternden Schwenkhebels 322 mit entlasteter Drehachse 327, wobei der Abstand zwischen der Drehachse 327 und einem Stift 329 an der Servostange 62 vergrößert ist, wird für die Einzugbewegung eine größere Weglänge notwendig. Dies wird mit Hilfe der Doppelkontur 228 ermöglicht, bei der die Absenkung des Liftes im Punkt D erfolgt. Von nun an laufen die Steuervorgänge ab. Das Anheben des Liftes beginnt im Punkt C. Zum besseren Verständnis sind die Punkte C und D in den Fig. 10A und 10B angedeutet. Die Wegstrecke 323 in Fig. 11 bedeutet den Einzugweg des Lifthebels 322. Fig. 11 zeigt, daß die Strecke 323 im Bereich der mit St angedeuteten Steuerstrecke der Servostange endet mit dem Absenkpfeil 324. Der Punkt C, in dem das Anheben beginnt, liegt gegenüber

Punkt D versetzt. Das Anheben endet in einem Punkt L, in dem die Rolle 314 den horizontalen Verlauf der Kontur 305 erreicht hat. Ein Anhebepfeil 326 zeigt den Hystereseweg an, der um den Betrag w streckenmäßig versetzt gegenüber dem Absenkpfeil 324 beginnt.

In Fig. 8 ist die Doppelkontur 228 nur schemenhaft dargestellt, ebenso wie die Rolle 314. Der Schwenkhebel 322 ist um die Drehachse 327 verschwenkbar. Im Lifthebel 322 ist eine Kulisse 328 vorgesehen, in die der Stift 329 der Servostange 62 eingreift. Der Stift 329 kann in der Kulisse entlangfahren und dabei den Schwenkhebel 322 verschwenken. Quer über die Kulisse 328 erstreckt sich eine Drahtfeder 330, die an ihren Enden 331 eingespannt ist.

Mittels des Kassettenliftes 217 kann eine Kassette 332 eingezogen werden. Die Kassette 332 weist ein Wickeldornloch 333 auf, in das ein Mitnehmer 334 eingreift. Der Mitnehmer ist an einem Arm 335 des Schwenkhebels 322 drehbar gelagert.

In der in Fig. 8 dargestellten Stellung hat der Mitnehmer 334 das Wickeldornloch 333 der von Hand eingeschobenen Kassette erfaßt. In dieser eingerasteten Position steht die Kassette 332 etwa noch 30 mm aus dem Gerät heraus. Beim weiteren Eindrücken der Kassette 332 spannt sich die Feder 330. Der Schwenkhebel 322 schließt nun einen Schalter 263, und die Servostange wird auf später noch beschriebene Weise durch das Ingangsetzen des Antriebsmotors 221 eingezogen vom ersten Ende A (Fig. 11) an. Der Stift 329 fährt nun in der Kulisse 328 in Richtung auf das Kulissenende 336 und gibt dabei die Feder 330 frei. Die Feder 330 ist damit entlastet, und der Schwenkhebel 322 wird von keiner Zugfeder mehr beanspucht. Auf die Drehachse 327 wird damit keine belastende seitliche Verstellkraft ausgeübt. Erst, wenn zum Zwecke einer Auswurfbewegung die Servostange 62 über den Punkt C hinaus in Richtung auf den Punkt A (Fig. 11) bewegt wird, dann fährt der Stift 329 in der Kulisse 328 zurück und drückt gegen die Feder 330, die daraufhin, auch nach dem Ausschalten des Motors 221 über den Schalter 263, den Schwenkhebel 322 so weit entgegen dem Uhrzeigersinn verschwenkt, daß die Kassette bis zum Entspannen der Feder 330 ausgeschoben wird.

Der Rasthebel 58 greift mit seinem Stift 60 durch das Loch 61 im Chassis 1 und liegt an einer Kante 240 an dem Riegelhebel 241. Der Riegelhebel 214 ist schwenkbar um eine Achse 242. Der Rasthebel 58 ist durch das Verbindungselement mit Feder 54 bestrebt, den Riegelhebel 241 von einem Riegelmagneten 244 wegzuschwenken. Eine Nase 243 am Riegerhebel 241 kann auf eine Kulisse 246 an der Servostange 62 auflaufen. Der Riegelmagnet 244 ist mit der Steuerschaltung 224 elektrisch verbunden.

Die Kulisse 246 gehört zu einer Nase 247, die auf die Servostange 62 aufgespritzt ist. Beim Verschieben der Servostange 62 kann die Kulisse 246 auf die Nase 243 des Riegelhebels 241 auflaufen und den Riegelhebel dabei so verschieben, daß dieser sich an den Riegelmagneten 244 anlegt. Ein einstellbarer Nocken 248 arbeitet gleichzeitig mit einem Spiel- und Umkehrschalter 249 zusammen. Wenn die Nase 248 an dem Schalter 249 vorbei läuft, dann wird dieser normalerweise geschlossene Schalter kurz geöffnet und wieder geschlossen.

Nahe einem Längsende 62a der Servostange 62 greift ein Kommandoglied 250 in Form einer Verbindungsstange an. Die Verbindungsstange ist in ein Loch der Servostange 62 mit einer Abbiegung gelenkig eingehängt. Die Verbindungsstange 250 reicht bis zu einem Kommandoblock 251. In diesem Kommandoblock (Fig. 9A und 9B) ist ein mehrteiliger Verbindungsweg 252 vorgesehen. Dieser mehrteilige Verbindungsweg 252 besteht aus einem immer im gleichen Richtungssinn durchfahrbaren, in sich rundgeschlossenen Leitweg 253, einer ersten Kommandobahn 254, einer zweiten Kommandobahn 255 und einer dritten Kommandobahn 256. In diesen Bahnen kann ein abgebogenes Ende der Verbindungsstange 250 in Form eines Kommandostiftes 257 eingreifen. Die Kommandobahnen 254 und 255 sind als durchgehende parallele Schlitze ausgebildet, in die von oben der Kommandostift 257 eingreifen kann und in die von unten her Mitnehmer 33a und 34a der Bedienungsstangen 33 und 34 eingreifen. Der Kommandostift 257 wird mit Hilfe eines Niederhalters 258 elastisch in die Bahnen hineingedrückt gehalten. Der Leitweg 253 besteht aus einer um einen Kern 259 herum laufenden Vertiefung im Kommandoblock 251. Der Boden des Leitweges 253 ist mit Absätzen 253a, 253b und 253c versehen. Diese Absätze sorgen dafür, daß der Kommandostift 257 im Leitweg 253 nur im Uhrzeigersinn umlaufen kann und nicht entgegen dem Uhrzeigersinn. Federn 260 und 261 sorgen dafür, daß die Bedienungsstangen 33 und 34 in Fig. 9 nach Freigabe durch den Kommandostift 257 immer nach links gedrückt werden.

Die Funktionsweise der Vorrichtung läßt sich wie folgt beschreiben: Wird eine Kassette aus der vorher beschriebenen eingerasteten Position weiter nach innen verschoben über etwa 10 mm, dann wird durch den Schwenkhebel 322 in der Zeichnung nach Fig. 8 der Schalter 263 geschlossen. Dadurch wird der Motor 221 gestartet und der Mikroprozessor 224 elektrisch angeschlossen. Die Servostange 62 wird in Fig. 8 nach rechts verschoben und läuft bis zu dem Reset-Schalter 225 nach rechts weiter. Bei dieser Verschiebung der Servostange senkt sich der Lift 217 ab, und zwar über die Kontur 304, 306 (Fig. 10A und 10B). Das Schließen des Reset-Schalters 225 hat zur Folge, daß der Mikroprozessor 224 in eine Ausgangslage geschaltet wird. Dies hat zur Folge, daß der Servomotor 221 seine Drehrichtung umkehrt und damit die Servostange 62 nach links verschiebt. Dabei läuft der Nocken 248 an dem Spiel-Umkehr-Schalter 249 vorbei, wobei dieser geöffnet wird, und der Servomotor schaltet ab, so daß die Servostange stehen bleibt. Der Laufwerksmotor 3 läuft jetzt an. Die Kulisse 246 ist dabei zwar auf die Nase 243 gestoßen, jedoch der Riegelhebel 241 hat sich nicht an den Riegelmagneten 244 angelegt, weil der Magnet noch nicht von der Schaltung 224 erregt ist. Dadurch ist der Stift 65 nicht in den Rastmechanismus 57 eingefahren und nicht verrastet.

Weil der Laufwerksmotor 3 angelaufen ist, drehen sich auch die Schwungscheiben 7 und 8, und zwar in gegensinniger Richtung. Gleichzeitig drehen sich die Zahnräder 11 und 12 und die mit ihnen kämmenden Zahnräder 14 und 15. Der Rasthebel 58 ist aus der Lage nach Fig. 2A in die Lage nach Fig. 2B gefahren, und der Raststift 65 kommt in den Wirkbereich mit der Herzkurve 56 nach Fig. 2B.

Weil die Zahnräder 14 und 17 nicht in Eingriff sind mit den Zahnrädern 24 und 25, drehen die beiden Wickeldorne 20 und 21 nicht mit. Die Scheiben 41 und 42 sind über ihre separaten Reibungskupplungen mit den Wickeldornen 20, 21 verbunden und stehen damit auch still. Da beim Eindringen der Kassette ein Drehmoment auf das Schaltelement 46 fehlt, weil die Bandwickel nicht umlaufen und das Band still steht, bleibt das Schaltelement 46 in der in Fig. 1 dargestellten Stellung stehen und kommt damit mit dem Stift 49 auf die Außenseite der Steuerkurve 41. Das Schaltelement 46 macht nun eine Bewegung im Uhrzeigersinn gemäß Pfeil 46a (Fig. 2A) und schwenkt das Verbindungselement 52 entgegen dem Uhrzeigersinn (Pfeil 67). Weil der Rasthebel 58 geschwenkt ist und der Stift 65 der Herzkurve 56 im Wirkbereich ist, umläuft der Stift 65 nun die Wand 68 der Herzkurve 56 und fällt in die Mulde 70 ein. Damit ist das Verbindungselement in einer eingeschwenkten Stellung eingerastet (siehe Fig. 2B).

Durch das Schwenken des Verbindungselementes 52 entgegen dem Uhrzeigersinn in Richtung des Pfeiles 67 hat sich der Nocken 71 nach innen bewegt und gegen die Blattfeder 72 gedrückt. Die Blattfeder drückt ihrerseits über die Halterungen 76 und 77 gegen die Kopfplatte 74 und versucht, sie in Richtung auf die Tonwellen 9, 10 zu schieben. Nun kommt die Wirkung der Steuerplatte 88 zur Geltung.

Vor dem Einschwenken des Nockens 71 war die Kopfplatte 74 von den Tonwellen weggefahren. Die Leitstifte 86, 87 waren dadurch in die Einlaufschlitze 110 und 111 eingelaufen (vergl. Fig. 5). Die Steuerplatte 88 hat nach dem Auswerfen der vorhergehenden Kassette, wie schon in Verbindung mit Fig. 7 beschrieben, die aus Fig. 6C zu ersehende Stellung. Beim Vorfahren der Kopfplatte 74 in Richtung auf die Tonwellen 9, 10 fahren die Leitstifte 86, 87 nach vorn und laufen auf der rechten Seite der Zungen 102, 103 auf und zugleich in die rechten Schenkel 107 und 108 der gabelförmigen Leitschlitze 104, 105. Bei dem Einfahren der Leitstifte 86, 87 in die Schenkel 107 und 108 nehmen die Leitstifte 86, 87 die Steuerplatte 88 nach rechts mit, so daß sich nunmehr die Schenkel 98, 108 und 97, 107 überdecken. Der rechte Leitstift 87 findet damit in dem kürzeren Schenkel beim Vorfahren einen Anschlag, während der linke Leitstift 86 frei in Richtung auf die Tonwelle 9 vorlaufen kann (Fig. 6D). Damit schwenkt die vorgedrückte Kopfplatte 74 auf der linken Seite derartig nach vorn, daß die linke Andruckrolle 78 gegen die linke Tonwelle 9 stößt. Die andere Tonwelle bleibt unbelastet. Die Kopfplatte 74 nimmt für sehr kurze Zeit die aus Fig. 4 zu ersehende Stellung ein.

Weil der Stift 65 nicht durch den Rastmechanismus 57 verrastet ist, bewegt sich die Kopfplate unter der Wirkung der Blattfeder 72, und die Feder 54 wandert in die Ausgangslage zurück. Ein Schalter 267 wird dann geschaltet, wodurch der Laufwerksmotor 3 abgeschaltet wird. Dieser Vorgang läuft so schnell ab, daß es der Benutzer gar nicht merkt. Dies ist notwendig, da die Bewegung der Steuerplatte 88 nach Fig. 6D zur Reverse-Abspielstellung führen würde. Es ist aber gewünscht, daß das Laufwerk beim Einschieben einer Kassette erst auf Vorlauf geschaltet wird. Dieser Vorgang wird durch den Mikroprozessor 224 dadurch erreicht, daß jetzt der Servomotor 221 wieder startet und die Servostange 62 nach rechts bewegt bis zum Reset-Schalter 225 und von dort wieder nach links läuft, bis sich der Riegelhebel 241 an den Riegelmagneten 244 angelegt hat. Da jetzt der Magnet 244 elektrisch erregt wird, bleibt der Riegelhebel 241 in dieser Stellung, so daß der Stift 65 von dem Rastmechanismus 57 gerastet werden kann. Der Spiel-Umkehr-Schalter 249 wird von dem Nocken 248 wieder geöffnet, die Servostange 62 hält an, der Laufwerksmotor 3 wird erneut in Betrieb gesetzt.

Beim erneuten Inbetriebsetzen des Laufwerksmotors 3 wird die Steuerplatte 88 verschoben. Beim Nach-außen-Fahren der Kopfplatte 75 sind die Leitstifte 86, 87 in die Einlaufschlitze 110 und 111 eingelaufen. Die Steuerplatte 88 ist in ihrer alten Stellung verblieben. Die Zungen 102 und 103 liegen damit noch immer in einer nach rechts verschobenen Lage gegenüber der mittigen Lage der Einlaufschlitze 110 und 111 (Fig. 6A). Beim erneuten Start des Laufwerksmotors 3 wird das Verbindungselement 52 wieder durch das Schaltelement 46 entgegen dem Uhrzeigersinn verschwenkt und damit die Kopfplatte 74 mittels des Stiftes 71 nach vorn geschoben.

Die Steuerplatte 88 hat die aus Fig. 6A zu ersehende angenommene Stellung. Beim Vorfahren der Kopfplatte 74 in Richtung der Tonwellen 9, 10 fahren die Leitstifte 86, 87 nach vorn und laufen auf der linken Seite der Zungen 102, 103 auf und zugleich in die linken Schenkel 106 und 109 der gabelförmigen Leitschlitze 104, 105. Bei dem Einfahren der Leitstifte 86, 87 in die Schenkel 106 und 109 nehmen die Leitstifte 86, 87 die Steuerplatte 88 nach links mit, so daß sich nunmehr die Schenkel 96, 106 und 99, 109 überdecken. Der linke Leitstift 86 findet damit in dem kürzeren Schenkel beim Vorfahren einen Anschlag, während der rechte Leitstift 87 frei in Richtung auf die Tonwelle 10 vorlaufen kann (Fig. 6B). Damit schwenkt die vorgedrückte Kopfplatte 74 auf der rechten Seite derartig nach vorn, daß die rechte Andruckrolle 79 gegen die rechte Tonwelle 10 stößt. Die andere Tonwelle bleibt unbelastet. Damit läuft das Band in der aus Fig. 3 zu ersehenden Vorwärts-Spiel-Richtung.

Beim Erreichen des Bandendes bleibt das Band stehen. Dadurch wird das Schaltelement 46 mit seinem Stift 49 erneut nach außen im Uhrzeigersinn geschwenkt. Das Verbindungselement 52 wird entgegen dem Uhrzeigersinn verschwenkt (Fig. 2B) in Richtung des Pfeiles 67. Das Verbindungselement 52 wird bei diesem Bewegen über den Normalhub, der bei der eingerasteten Lage vorliegt, in einem Überhub weitergeschwenkt. Der Überhub wird möglich, da der Nocken 71 gegen die Blattfeder 72 über die Hebel 76, 77 an der Kopfplatte 74 drückt und damit Ausweichspielraum in Richtung auf die Kopfplatte hat. Bei diesem Überhub fährt der Stift 65 aus der Mulde 70 heraus, und der Rastmechanismus 57 entrastet. Unter Wirkung der Feder 54 schwenkt das entrastete Verbindungselement 52 nun im Uhrzeigersinn, so daß der Nocken 71 nach außen fährt. In dieser Lage ist die Kopfplatte nach außen zurückgefahren, und die Leitstifte 86, 87 sind wieder in die Einlaufschlitze 110 und 111 eingelaufen. Die Steuerplatte 88 ist in ihrer alten Stellung verblieben. Die Zungen 102 und 103 liegen noch immer in einer nach links verschobenen Lage gegenüber der mittigen Lage der Einlaufschlitze 110 und 111 (Fig. 6C).

Es kommt nun der automatische Reversiervorgang. Das Schaltrad 14 dreht nach wie vor weiter. Da sich die Kopfplatte 74 zurückgezogen hat, hat sie ihr umgebogenes Ende 80 auch nach außen gezogen und damit den Schwenkarm 16 derart verschwenkt, daß das Schaltrad 14 außer Eingriff ist vom Spielrad 25. Damit wird das Spielrad 25 nicht mehr angetrieben. Das Detektionsorgan 40 stellt Bandstillstand fest. Aufs Neue wird das Schaltelement 46 im Uhrzeigersinn verschwenkt. Das Schaltelement 46 drückt gegen das Verbindungselement 52 und schwenkt dieses erneut entgegen dem Uhrzeigersinn in Richtung des Pfeiles 67. Damit umfährt der Stift 65 erneut die Herzkurve 56, und der Stift fällt letztlich wieder in die Mulde 70 ein; das Verbindungselement 52 verrastet. Der Nocken 71 ist nun wieder nach vorn geschoben, und die Kopfplatte 74 nimmt nach ihrem Vorfahren die aus Fig. 4 ersichtliche Stellung ein. Das Zahnrad 17 ist über das umgebogene Ende 81 der Kopfplatte 74 mit dem Zahnrad 11 und mit dem Spielrad 24 im Eingriff. In dieser Lage nach Fig. 4 liegt die Andruckrolle 78 an der Tonwelle 9 an, und das Band wird in entgegengesetzter Richtung transportiert.

Die Umkehrung der Bandtransportrichtung ist wieder durch die Leitschlitzanordnung bewirkt worden, die in Fig. 6 in verschiedenen Stellungen dargestellt ist. Die letzte beschriebene Stellung war die Stellung nach Fig. 6C. In dieser Stellung ist die Steuerplatte 88 nach links verschoben; die Leitstifte 86, 87 liegen in den Einlaufschlitzen 110 und 111. Durch das erneute Vorfahren der Kopfplatte 74 sind die Leitstifte 86, 87 ebenfalls nach vorn gefahren und sind gegen die rechten Schrägflächen der angespitzten Zungen 102 und 103 gelaufen. Die Leitstifte 86, 87 wurden dadurch nach rechts verschoben und konnten weiter einfahren in die Schenkel 108 und 107. Die Querverschiebung der Leitstifte 86, 87 ist möglich durch das Verrutschen der Leitstifte 86, 87 in den Längsschlitzen 84, 85. Bei dem Einfahren in die Schenkel 107 und 108 haben die Leitstifte 86, 87 die Steuerplatte 88 nach rechts mitgenommen, so daß sich nunmehr die Schenkel 108 und 98 sowie 107 und 97 überdecken. Damit haben sich die Zungen 102, 103 wieder so versetzt, daß bei ihrem erneuten Zurückfahren und vorfahren der Leitstifte diese dann wieder auf die linken Schrägflächen der angespitzten Zungen 102 und 103 auflaufen können. Die Stellung der Leitschlitzanordnung in diesem Fall ist aus Fig. 6D zu ersehen. Der Leitstift 87 hat in den kürzeren Schenkeln 107 und 97 auf seinem Vorfahrweg einen Anschlag vorgefunden, der die Kopfplatte 74 daran hindert, auf der rechten Seite weiter vorzufahren. Auf der linken Seite hat der Leitstift 86 keinen Anschlag vorgefunden, und er konnte in den Schenkeln 108 und 98 so weit vorfahren, daß die Feder 72 die linke Seite der Kopfplatte 74 die Andruckrolle 78 gegen die Tonwelle 9 drücken konnte. Diese Stellung ist aus Fig. 4 zu ersehen.

Es wird bemerkt, daß ein Spurschalter 265 vorgesehen ist, der dem Mikroprozessor 224 sagt, in welcher Richtung das Band abgespielt wird. Der Spurschalter 265 wird von einer Nase 266 an der Kopfplatte 74 angestoßen in der Lage nach Fig. 3. In der anderen Lage der Kopfplatte 74 nach Fig. 4 ist er offen. Der Schalter 265 sorgt dafür, daß abhängig von der Laufrichtung die richtigen Spuren des Magnetkopfes 75 geschaltet sind.

Es ist ohne weiteres auch ein Reverse-Betrieb während des normalen Spielbetriebes per Hand zu erreichen. Dazu wird durch kurzes Antippen einer Taste 264 der Riegelmagnet 244 abgeschaltet, und der Riegelhebel 241 fällt ab unter Wirkung der Feder 54 am Verbindungselement 52. Der Stift 60 kippt damit in der Zeichnung nach Fig. 8 nach links. Der Rastmechanismus 57 wird entrastet, weil der Stift 65 aus seinem Wirkbereich herausfährt. Dadurch kann die Kopfplatte 74 ausfahren. Der Laufwerksmotor 3 bleibt nun durch Schalten des Schalters 267 stehen, bis der Servomotor 221 die Servostange 62 einmal gegen den Schalter 225 und wieder zurückgefahren hat in die Spielstellung, wobei der Schalter 249 durch den Nocken 248 wieder geöffnet ist. Während dieser Bewegung hat die Kulisse 246 den Riegelhebel 241 wieder an den Riegelmagneten 244 angeklebt. Der Rastmechanismus 57 ist durch das Einfahren des Stiftes 65 wieder in Funktion gebracht worden. Die Steuerschaltung 224 setzt wieder den Laufwerksmotor 3 in Betrieb. Der Transporthebel 52 wird verschwenkt und die Kopfplatte 74 eingefahren. Dabei hat sich zugleich die Bandlaufrichtung umgekehrt mit Hilfe der Steuerplatte 88 nach Fig. 5 und 6.

Zum Schnellspulen wird, abhängig von der Richtung, eine der mit der Steuerschaltung elektrisch verbundenen Schnellspul-Tiptasten 268, 269 getippt. Der Riegelmagnet 244 bleibt ausgeschaltet über die Steuerschaltung 224.

In der Spielstellung liegt der Kommandostift 257 im Startbereich 270 des rundgeschlossenen Leitweges 253. Der Kommandostift 257 liegt mit Toleranz in dem Startbereich 270. Diese Toleranz kann eingestellt werden durch einen nicht dargestellten Justierblock, der die Nocken 248 einstellt. Dadurch kann das Schließmoment des Schalters 249 eingestellt werden. Der Variationsbereich der Stellung des Stiftes 257 liegt zwischen der ausgezogenen Stellung des Stiftes 257 und einer schraffierten Stellung (Fig. 9B). Es wird davon ausgegangen, daß in dem Bereich, wo auf ein Schnellspulen übergegangen werden soll, normaler Spielbetrieb in der Vorwärtsrichtung vorliegt. Drückt man nun auf die Schnellspul-Tiptaste 268, dann steuert die Steuerschaltung 224 den Servomotor 221 so an, daß die Servostange 62 sich nach rechts verschiebt (Fig. 8, 9A und 9B). Der Kommandostift 257 fährt nun in die erste Kommandobahn 254 ein. Dabei nimmt er den Mitnehmer 33a der Bedienungsstange 33 nach rechts mit bis in die in Fig. 9B schraffiert dargestellte rechte Stellung. Gleichzeitig haben sich die Zahnräder nach Fig. 1 so verstellt, daß das Band in der Vorwärtsrichtung schnell transportiert wird. Mittels der Schrägfläche 35a, 35b wurden die Stifte 74c, 74d verschoben, was zur Folge hatte, daß die Kopfplatte 74 vom Band abgerückt ist (Fig. 1). Der Bewegungshub der Kopfplatte 74 ist aber verkürzt, so daß der Schalter 267 nicht geschaltet wird. Der schnelle Vorlauf kann beendet werden durch das Antippen der Tip-Spieltaste 264. Die Servostange 62 schiebt sich wieder zurück in die Spiellage, und der Kommandostift 257 erreicht wieder den Startbereich 270. Die Feder 260 schiebt die Bedienungsstange 33 nach links. Das Abspielen des Bandes erfolgt wieder in der Richtung, in der vorher abgespielt wurde.

Ist schneller Rücklauf gewünscht, dann wird auf die Schnellspul-Tiptaste 269 gedrückt. Die Steuerschaltung 224 gibt auf den Servomotor 221 ein Kommando, daß dieser die Servostange 62 nach links fahren läßt. Der Kommandostift 257 passiert die Kante 253a und ist damit in den Leitweg 253 weiter eingelaufen. In diesem Augenblick hat sich der Schalter 249 wieder geschlossen, was bedeutet, daß der Servomotor 221 nun in der Gegenrichtung umgesteuert wird mittels der Steuerschaltung 224. Der Kommandostift 257 ist nun gezwungen, in dem Leitweg 253 in der bereits beschrittenen Richtung weiterzulaufen, und zwar bis zu einer Kante 253b. Diese zwingt ihn, in die Kommandobahn 255 einzulaufen, wobei er den Mitnehmer 34a mitnimmt und nach rechts verschiebt in die in Fig. 9B dargestellte rechte Stellung. Die einzelnen Bauteile in Fig. 1 haben sich nun in umgekehrter Richtung zum schnellen Rückspulen verstellt, und die Kante 36a, 36b hat wieder gegen die Stifte 74c und 74d gestoßen, womit die Kopfplatte wieder vom Band abgerückt ist. Der schnelle Rücklauf kann wieder beendet werden, indem die Spiel-Tiptaste 264 getippt wird. Dabei läuft der Kommandostift 257 bei rücklaufender Servostange 62 wieder in den Leitweg 253 ein bis in den Startbereich 270. Die Bedienungsstange 34 ist aufgrund der Vorspannung der Feder 261 dem Kommandostift 257 gefolgt und zurückgefahren in die Ausgangsstellung. Jetzt fängt wieder das Abspielen in der ursprünglichen Abspielrichtung an.

Beim Betätigen einer elektrischen Auswurf-Tiptaste 271 wird der Riegelmagnet 244 entregt, und der Riegelhebel 241 fällt ab. Dabei wird die Kopfplatte 74 vom Band weggeschoben; der Schalter 267 schließt sich, und der Laufwerksmotor schaltet ab. Dadurch wird gesichert, daß der Kopf vom Band abgehoben hat und weder Band noch Kopf beschädigt werden können. Der Servomotor 221 fährt die Servostange 62 ganz nach links aus. Dabei fährt der Kommandostift 257 in die dritte Kommandobahn 256 ein. Weiterhin zieht die Feder 235 den Auswerfer 232 gegen den Stift 237 und dreht den Auswerfer 232 entgegen dem Uhrzeigersinn. Damit wird die Kassette 228 nach Heben des Liftes 217 ausgeschoben, der Schalter 263 öffnet sich.

## Patentansprüche

1. Steuervorrichtung an einem Magnetbandkassettengerät
- mit einem von einer Servostange (62) um einen Drehpunkt (327) verschwenkbaren Einzieh-bzw. Auswurfhebel (322), der wenigstens während eines Teiles seiner Schwenkbewegung gegen Federkraft (330) verschwenkbar ist,
- mit einem Kassettenlift (217), der über eine Absenk- und Anhebestrecke, die an einer Kontur (228) der Servostange (62) vorgesehen ist, absenk- bzw. anhebbar ist, wobei die Servostange zwischen einer ersten Endstellung (A, Fig. 11), in der die Kassette (332) ausgeworfen ist, und einer zweiten Endstellung (B, Fig. 11), in der die Kassette eingezogen und abgesenkt ist, geradlinig hin und her bewegbar ist,
- mit einem an der Servostange (62) vorgesehenen Stift (329), der den Einzieh- bzw. Auswurfhebel (322) über eine Kulisse (328) in diesem Hebel führt,
- mit einem am Kassettenlift (217) vorgesehenen Führungselement (314), das die Kontur (228) abfährt,
dadurch gekennzeichnet, daß auf dem Einzieh- und Auswurfhebel (322) ein Federelement (330) angeordnet ist, das nur längs eines Anfangsteiles der Kulisse (328) auf den Stift (329) einwirkt, und daß zwei Konturen (304, 305) für die Liftsteuerung vorgesehen und derart angeordnet sind, daß am Ende der Einzugbewegung des Hebels (322) der Lift (217) mit dem Führungselement (314) zwangsweise erst die erste Kontur (304) abfährt und danach am Anfang der Auswurfbewegung überwechselt zu der zweiten Kontur (305) und diese in entgegengesetzter Richtung abfährt, wobei beide Konturen (304, 305) Absenk- bzw. Anhebestrecken aufweisen und die Absenkstrecke der ersten Kontur (304) von der ersten Endstellung (A) einen größeren Abstand hat als der Anhebebeginn (310) der Anhebesrecke (308) der zweiten Kontur (305) (Fig. 8, 10a, 10b, und 11).

2. Steuervorrichtung nach Anspruch 1, dadurch gekennzeichnet, daß das Führungselement (314) federbelastet ist senkrecht zur Verschieberichtung der Servostange (62) von einer Kontur (305) zur anderen Kontur (304).

3. Steuervorrichtung nach den Ansprüchen 1 und 2, dadurch gekennzeichnet, daß beide Konturen (304, 305) aus einem langgestreckten Formteil (228) bestehen, wobei die erste Kontur (304) an ihrem Ende im Bereich der Absenkstrecke Abschrägungen (306) aufweist, über die das Führungselement (314) hinüber gezwungen wird zum Überwechseln zur zweiten Kontur (305), wenn die Servostange (62) sich zurück bewegt von der zweiten Endstellung (B) zur ersten Endstellung (A).

4. Steuervorrichtung nach einem oder mehreren der Ansprüche 1 bis 3, dadurch gekennzeichnet, daß das Führungselement (314) aus einer Rolle besteht, die auf einer am Lift (217) befestigten Achse (315) in Achsrichtung der Achse (315) verschiebbar ist unter der Wirkung einer Feder (317).

5. Steuervorrichtung nach Anspruch 1, dadurch gekennzeichnet, daß das Federelement (330) ein Federstab ist, der quer zur Kulisse (328) eingespannt ist.

## Claims

1. A control device for a magnetic-tape-cassette apparatus comprising
- a loading and ejection lever (322) which is pivotable about a pivot (327) by a servo rod (62) and which is pivotable against spring force (330) at least during a part of its pivotal movement,
- a cassette lift (217), which can be lowered and raised via a lowering and lifting path on a guide surface (228) of the servo rod (62), which servo rod can be moved to and from rectilinearly between a first end position (A, Fig. 11), in which the cassette (332) is ejected, and a second end position (B, Fig. 11), in which the cassette is drawn in and lowered,

- a pin (319) on the servo rod (62), which pin guides the loading and ejection lever (322) via a slot (328) in said lever,

- a guide element (314) on the cassette lift (217), which element co-operates with the guide surface (228),

characterized in that the loading and ejection lever (322) carries a spring element (330) which influences the pin (329) only along an initial portion of the guide surface (328) and in that there are provided two guide surfaces (304, 305) for controlling the lift movements, which surfaces are arranged in such a way that at the end of the loading movement of the lever (322) the guide element (314) of the lift (217) is first forced to cooperate with the first guide surface (304) and subsequently, at the beginning of the ejection movement, changes over to the second guide surface (305) which is followed in the opposite direction, which guide surfaces (304, 305) each comprise lowering and raising portions, the lowering portion of the first guide surface (304) having a larger distance from the first end position (A) than that point (310) of the raising portion (308) of the second guide surface (305) where raising begins, (Figs. 8, 10a, 10b and 11).

2. A control device as claimed in Claim 1, characterized in that the guide element (314) is spring-loaded perpendicularly to the direction of movement of the servo rod (62) from one guide surface (305) to the other guide surface (304).

3. A control device as claimed in Claims 1 and 2, characterized in that both guide surfaces (304, 305) are formed on an elongate moulded member (228), the first guide surface (304) at the end of the lowering path having an inclined portion (306) via which the guide element (314) is forced to change over to the second guide surface (305) is forced to change over to the second guide surface (305) when the servo rod (62) returns from the second end position (B) to the first end position (A).

4. A control device as claimed in any one or several of the Claims 1 to 3, characterized in that the guide element (314) is a roller which under the influence of a spring (317) is axially movable on a spindle (315) secured to the lift (217).

5. A control device as claimed in Claim 1, characterized in that the spring element (330) is a resilient rod which is fastened transversely of the guide slot (328).

**Revendications**

1. Dispositif de commande d'un appareil à cassettes de bande magnétique, comprenant

- un levier d'introduction et d'éjection (322) pouvant pivoter autour d'un point de pivotement (327) à l'intervention d'une servotige (62), qui, au moins pendant une partie de son mouvement de pivotement, peut pivoter à l'encontre de la force d'un ressort (330),

- un élévateur de cassette (217) qui peut être descendu et monté d'une distance de descente et de montée prévue sur un profil (228) de la servotige (62), la servotige étant mobile en ligne droite dans un sens et dans l'autre entre une première position d'extrémité (A, Fig. 11), dans laquelle la cassette (332) est éjectée, et une seconde position d'extrémité (B, Fig. 11), dans laquelle la cassette est introduite et descendue,

- un doigt (329) prévu sur la servotige (62), qui guide le levier d'introduction et d'éjection (322) par l'intermédiaire d'une coulisse (328) prévue dans ce levier,

- un élément de guidage (314) prévu sur l'élévateur de cassette (217), qui suit le profil (228),

caractérisé en ce que, sur le levier d'introduction et d'éjection (322), est monté un élément à ressort (330) qui n'agit sur le doigt (329) que le long d'une partie initiale de la coulisse (328), et que deux profils (304, 305) sont prévus pour la commande de l'élévateur et sont agencés de manière telle qu'à la fin du mouvement d'introduction du levier (322), l'élévateur (217), par l'élément de guidage (314), parcoure tout d'abord le premier profil (304) puis, au début du mouvement d'éjection, passe au second profil (305) et le parcoure dans le sens opposé, les deux profils (304, 305) présentant des sections de descente et de montée et la section de descente du premier profil (304) étant située à une plus grande distance de la première position d'extrémité (A) que le début montant (310) de la section de montée (308) du second profil (305) (Fig. 8, 10a, 10b et 11).

2. Dispositif de commande suivant la revendication 1, caractérisé en ce que l'élément de guidage (314) à ressort est perpendiculaire à la direction de déplacement de la servotige (62) d'un profil (305) à l'autre profil (304).

3. Dispositif de commande suivant les revendications 1 et 2, caractérisé en ce que les deux profils (304, 305) sont constitués d'une pièce moulée oblongue (228), le premier profil (304) présentant sur son extrémité, dans la zone de sa section d'abaissement, des chanfreins (306) par l'intermédiaire desquels l'élément de guidage (314) est forcé de passer au second profil (305) lorsque la servotige (62) recule depuis la seconde position d'extrémité (B) vers la première position d'extrémité (A).

4. Dispositif de commande suivant l'une quelconque des revendications 1 à 3, caractérisé en ce que l'élément de guidage (314) est constitué d'un galet qui peut être déplacé sur un axe (315) fixé à l'élévateur (217), dans le sens axial de cet axe (315), sous l'influence d'un ressort (317).

5. Dispositif de commande suivant la revendication 1, caractérisé en ce que l'élément à ressort (330) est une lame de ressort qui est bandée perpendiculairement à la coulisse (328).

FIG.1

FIG.2A

FIG.2B

FIG.3

0 167 203

FIG.4

FIG.5

FIG.6

FIG.8

FIG.7

FIG.9A

FIG.9B

Fig.10A

Fig.10 B

Fig.11